(19) Europäisches Patentamt
European Patent Office
Office européen des brevets

(11) EP 0 695 785 B1

(12) **EUROPÄISCHE PATENTSCHRIFT**

(45) Veröffentlichungstag und Bekanntmachung des Hinweises auf die Patenterteilung:
**20.05.1998 Patentblatt 1998/21**

(51) Int Cl.[6]: **C08L 69/00**
// (C08L69/00, 67:00)

(21) Anmeldenummer: **95111317.4**

(22) Anmeldetag: **19.07.1995**

(54) **Mischungen aus Polycarbonat, phenolisch hydroxyfunktionellen verzweigten Dimerfettsäurepolyestern und gegebenenfalls Pfropfpolymerisat**

Mixtures from polycarbonate, phenolic hydroxyfunctional branched dimer fatty acid polyesters and optionally graft copolymers

Mélanges de polycarbonate, de polyesters d'acides gras dimériques ramifiés à fonctions hydroxyles phénoliques et éventuellement des copolymères greffés

(84) Benannte Vertragsstaaten:
**BE DE FR GB IT NL**

(30) Priorität: **01.08.1994 DE 4427228**
**02.06.1995 DE 19520279**

(43) Veröffentlichungstag der Anmeldung:
**07.02.1996 Patentblatt 1996/06**

(73) Patentinhaber: **BAYER AG**
**51368 Leverkusen (DE)**

(72) Erfinder:
- **Köhler, Burkhard, Dr.**
  **D-47829 Krefeld (DE)**
- **Wittmann, Dieter, Dr.**
  **D-51375 Leverkusen (DE)**
- **Ebert, Wolfgang, Dr.**
  **D-47829 Krefeld (DE)**
- **Beicher, Horst**
  **D-47918 Tönisvorst (DE)**
- **Tischer, Werner,**
  **D-41542 Dormagen (DE)**
- **Horn, Klaus, Dr.**
  **D-41539 Dormagen (DE)**

(56) Entgegenhaltungen:
**EP-A- 0 141 268** **DE-A- 4 132 079**

- **DATABASE WPI Week 9438 Derwent Publications Ltd., London, GB; AN 94-308839 & KR-B-9 310 235 (KOLON IND INC) , 15.Oktober 1993**
- **DATABASE WPI Derwent Publications Ltd., London, GB; AN 93261824 & JP-A-05 179 128 (KANEBO LTD) , 20.Juli 1993**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 695 785 B1

## Beschreibung

Die Erfindung betrifft Mischungen aus Polycarbonat, phenolisch hydroxyfunktionellen verzweigten Dimerfettsäurepolyestern und gegebenenfalls Pfropfpolymerisaten, die sich durch eine gute Tieftemperaturzähigkeit, Spannungsrißbeständigkeit und Entformbarkeit auszeichnen.

DE-OS 4 132 079 beschreibt phenolisch hydroxyfunktionelle Dimerfettsäureester und deren Verwendung zur Herstellung von Polyestercarbonaten. Ein Hinweis, daß die Dimerfettsäurepolyester die physikalischen Eigenschaften von Mischungen aus Polycarbonat und gegebenenfalls Pfropfpolymerisat verbessern, ist nicht zu entnehmen. Die in DE-OS 4 132 079 beschriebenen Polyestercarbonate bewirken, in PC/ABS-Mischungen nur eine geringe Schlagzähigkeitsverbesserung.

Bei der Verarbeitung durch Spritzgießen ist ein Zusatz von Gleit- bzw. Entformungsmitteln üblich, die ein Anbacken des Formteils im Werkzeug verhindern sollen. Hierfür werden in den Formmassen des Stands der Technik überwiegend Carbonsäureester mehrwertiger Alkohole (z.B. Pentaerythrittetrastearat) eingesetzt (Becker/Braun, Kunststoff-Handbuch Band 3/2, Technische Polymer-Blends, S. 162).

Die Aufgabe der vorliegenden Erfindung ist die Verbesserung der physikalischen Eigenschaften, insbesondere Zähigkeit, Spannungsrißbeständigkeit und Schlagzähigkeit von Polycarbonat und Mischungen aus Polycarbonat und Pfropfpolymerisaten, insbesondere ABS-Polymerisaten, sowie eine bessere Entformbarkeit der Formmassen.

Es wurde gefunden, daß Polycarbonat-Mischungen, die phenolisch hydroxyfunktionelle Dimerfettsäurepolyester enthalten, eine gute Zähigkeit und Benzinbeständigkeit und daß Mischungen aus Polycarbonat, Dimerfettsäurepolyester und Pfropfpolymerisaten eine gute Schlagzähigkeit und verbesserte Entformbarkeit ohne Beeinträchtigung der übrigen Eigenschaften aufweisen.

Gegenstand der vorliegenden Erfindung sind Formmassen, enthaltend:

A) 10 bis 100, vorzugsweise 30 bis 96, insbesondere 50 bis 90 Gew.-Teile aromatisches Polycarbonat und/oder aromatisches Polyestercarbonat

B) 0,05 bis 25, vorzugsweise 0,1 bis 15, besonders bevorzugt 0,3 bis 10 Gew.-Teile phenolisch hydroxyfunktionelle verzweigte Dimerfettsäurepolyester,

C) 0 bis 70, vorzugsweise 2 bis 50, insbesondere 5 bis 25 Gew.-Teile Pfropfcopolymerisat von

 C.1) 5 bis 98 Gew.-Teilen einer Pfropfauflage aus einem oder mehreren Monomeren auf

 C.2) 2 bis 95 Gew.-Teile einer oder mehrerer elastomeren Pfropfgrundlagen mit Glasübergangstemperaturen <10°C, vorzugsweise <-20°C,

D) 0 bis 70, vorzugsweise 2 bis 50, insbesondere 2 bis 30 Gew.-Teile thermoplastisches Harz aus der Gruppe der

 D.1) Vinyl(co)polymerisate und/oder

 D.2) Polyalkylenterephthalate,

wobei die Summe der Gew.-Teile aus A+B+C+D 100 beträgt.

### Komponente A

Aromatische Polycarbonate und/oder aromatische Polyestercarbonate gemäß Komponente A sind literaturbekannt oder nach literaturbekannten Verfahren herstellbar (Zur Herstellung aromatischer Polycarbonate siehe beispielsweise Schnell, "Chemistry and Physics of Polycarbonates", Interscience Publishers, 1964, sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate siehe z.B. DE-OS 3 007 934).

Die Herstellung aromatischer Polycarbonate und/oder aromatischer Polyestercarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweisen Benzoldicarbonsäuredihalogeniden, nach dem Phasengrenzflächenverfahren, gegebenenfalls unter Verwendung von Kettenabbrechern, beispielsweise Monophenolen, und gegebenenfalls unter Mitverwendung von trifunktionellen oder mehr als trifunktionellen Verzweigern, bespielsweise Triphenolen oder Tetraphenolen.

Diphenole zur Herstellung der aromatischen Polycarbonate und/oder aromatischen Polyestercarbonate sind vorzugsweise solche der Formel (I)

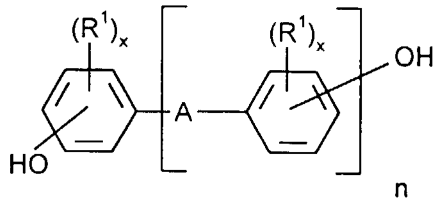 (I)

wobei

A eine Einfachbindung, $C_1$-$C_5$-Alkylen, $C_2$-$C_5$-Alkyliden, -O-, -SO-,

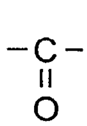 -S-, 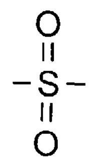 ,

ein Rest der Formel (II)

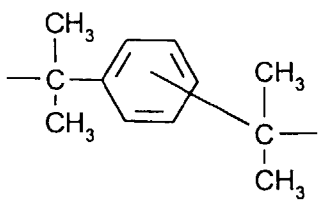 (II)

oder ein Rest der Formel (III)

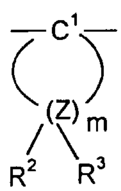 (III)

$R^1$ Chlor, Brom,

x 0, 1 oder 2 und

n 1 oder 0 bedeutet,

Z Kohlenstoff,

$R^2$ und $R^3$ für jedes Z individuell wählbar, unabhänging voneinander Wasserstoff oder $C_1$-$C_6$-Alkyl, vorzugsweise $C_1$-$C_4$-Alkyl,

m eine ganze Zahl von 4 bis 7, vorzugsweise 4 oder 5 bedeuten.

Der Rest der Formel (III) steht vorzugsweise für

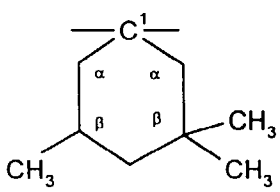
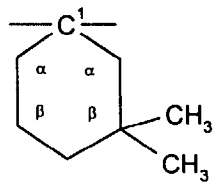
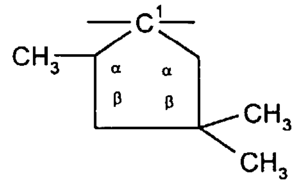

Geeignete Diphenole sind z.B. Hydrochinon, Resorcin, Dihydroxydiphenole, Bis-(hydoxyphenyl)-$C_1$-$C_5$-alkane, Bis-(hydroxyphenyl)-$C_5$-$C_6$-cycloalkane, Bis(hydroxyphenyl)-ether, Bis-(hydroxyphenyl)-sulfoxide, Bis-(hydroxyphenyl)-ketone, Bis-(hydroxyphenyl)-sulfone, und $\alpha,\alpha$-Bis-(hydroxyphenyl)-diisopropylbenzole sowie deren kernbromierte und/oder kernchlorierte Derivate.

Bevorzugte diphenole der formel (I) sind z.B. Hydrochinon, Recorcin, 4,4'-Diphydroxydiphenyl, 2,2-bis(4-hydroxyphenyl)-propan (bisphenol A) 2,4-Bis-(4-hydroxyphenyl)-2-methylbutan, 2,2-Bis-(4-hydroxy-3,5-dimethylphenyl)-propan, 1,1-Bis-(4-hydroxyphenyl)-cyclohexan oder 1,1-Bis-(4-hydroxyphenyl-)-3,3,5-trimethylcyclohexan. Bevorzugte Diphenole der Formel (I) sind 2,2-Bis-(4-hydroxyphenyl)-propan und 1,1-Bis-(4-hydroxyphenyl)3,35-trimethylcyclohexan. Es können auch Mischungen von Diphenolen eingesetzt werden, z.B. aus Bisphenol A und bis zu 60 Mol-% 1,1-Bis-(4-hydroxyphenyl)-3,3,5-trimethylcyclohexan.

Besonders bevorzugte Diphenole sind Bisphenol-A, 2,4-Bis-(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis(3,5-dichlor-4-hydroxyphenyl)-propan, 2,2-Bis(3,5-dibrom-4-hydroxyphenyl)-propan. Insbesondere bevorzugt ist 2,2-Bis-(4-hydroxyphenyl)-propan (Bisphenol A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octyllphenol, p-tert.-Octylphenol, p-Dodecylphenol und 2-(3,5-Dimethylheptyl)-phenol und 4-3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte ($\overline{M}_w$, gemessen z.B. durch Ultrazentrifugation oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen Gruppen.

Geeignet sind sowohl Homopolycarbonate als auch Copolycarbonate. Zur Herstellung erfindungsgemäßer Copolycarbonate A) können auch 1 bis 25 Gew.-%, vorzugsweise 2,5 bis 25 Gew.-% (bezogen auf die Gesamtmenge an einzusetzenden Diphenolen), Diphenole der Formel(IV) verwendet werden,

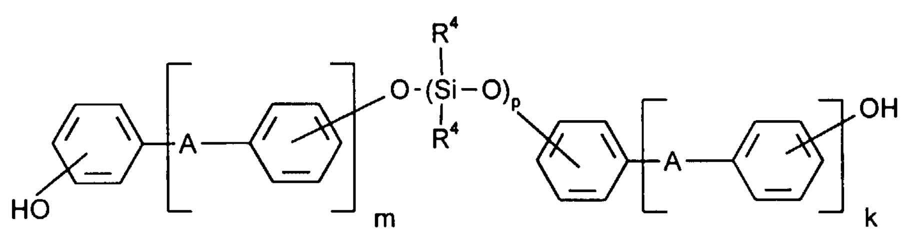

(IV)

worin

A die für Formel (I) genannte Bedeutung hat,

k 1 oder null ist,

$R^4$ gleich oder verschieden ist und ein lineares $C_1$-$C_{20}$-Alkyl, verzweigtes $C_3$-$C_{20}$-Alkyl oder $C_6$-$C_{20}$-Aryl, vorzugsweise $CH_3$, ist und

p eine Zahl zwischen 5 und 100, vorzugsweise zwischen 20 und 80 ist.

Polydiorganosiloxane mit Hydroxy-aryloxy-Endgruppen gemäß Formel (IV) sind bekannt (s. beispielsweise US-Patent 3 419 634) bzw. nach literaurbekannten Verfahren herstellbar. Die Herstellung Polydiorganosiloxan-haltiger Copolycarbonate wird z.B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, an den anderen der bevorzugt bzw. besonders bevorzugt genannten Diphenole, insbesondere an 2,2-Bis(3,5-dibrom-4-hydroxyphenyl)-propan.

Aromatische Dicarbonsäuredihalogenide zur Herstellung der thermoplastischen, aromatischen Polyestercarbonate sind vorzugsweise die Disäuredichloride der Isopthalsäure, Terepthalsäure, Diphenylether-4,4'-dicarbonsäure und der Naphthalin-2,6-dicarbonsäure.

Besonders bevorzugt sind Gemische der Disäuredichloride der Isopthalsäure und der Terepthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$-$C_{22}$-Alkylgruppen oder durch Halogenatome substituiert sein können sowie aliphatische $C_2$-$C_{22}$-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein. (Siehe dazu ebenfalls DE-OS 2 940 024 und DE-OS 3 007 934.)

Als Verzweigungsmittel können beispielsweise 3- oder mehrfunktionelle Carbonsäurechloride, wie Trimesinsäuretrichlorid, Cyanursäuretrichlorid, 3,3'-, 4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,6tri-(4-hydroxyphenyl)-hepten-2, 4,6-Dimethyl-2,4-6-tri(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(hydroxy-phenyl)-cyclohexyl]-propan, 2,4-Bis(4-hydroxyphenylisopropyl)-phenol, Tetra-(4-hydroxyphenyl)-methan, 2,6-Bis (2-hydroxy-5-methylbenzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytriphenyl)-methyl]-benzol, in Mengen von 0,001 bis 1,0 Mol-% (bezogen auf eingesetzte Diphenole) verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyesteercarbonaten kann der Anteil an Carbonatstruktureinheiten beliebig variieren.

Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen.

Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polyestercarbonate liegt im Bereich 1,18 bis 1,4, vorzugsweise 1,22 bis 1,3 (gemessen an Lösungen von 0,5 g Polyestercarbonat in 100 ml $CH_2Cl_2$-Lösungen bei 25°C).

Die thermoplastischen, aromatischen Polycarbonate und Polyestercarbonate können allein oder im beliebigen Gemisch untereinander eingesetzt werden.

**Komponente B**

Die Dimerfettsäurepolyester sind bekannt und in DE-OS 4 132 079 beschrieben. Bei den Dimerfettsäurepolyestern

handelt es sich um verzweigte Polyester mit phenolischen OH-Gruppen und mit mittleren Zahlenmittelmolekulargewichten $\overline{M}_n$ (gemessen durch Gelchromatographie) von 400 bis 200 000, vorzugsweise von 2 000 bis 100 000 und insbesondere von 3 000 bis 50 000. Die Polyester werden hergestellt, indem man $C_{36}$ bis $C_{44}$-Dimerfettsäuren mit Dialkoholen nach den bekannten Umesterungsverfahren umsetzt, wobei 0,5 bis 10, vorzugsweise 1 bis 5 Mol-% an Verzweigern und 1 bis 20, vorzugsweise 3 bis 20 Mol-% an Hydroxyarylcarbonsäuren oder ihre Ester mit $C_1$-$C_6$-Alkoholen als Kettenabbrecher eingesetzt werden, bezogen jeweils auf Mole Dimerfettsäure.

Anstelle der Dicarbonsäure können auch in bekannter Weise deren Anhydride oder Alkylester für die Polyestersynthese eingesetzt werden.

Bevorzugte Dicarbonsäuren sind $C_{36}$- und $C_{44}$-Dimerfettsäure, die auch bis zu 20 Gew.-% Mono- oder Tricarbonsäuren oder ungesättigte Säuren enthalten können.

Geeignete Dialkohole sind beliebige aliphatische oder cycloaliphatische Glykole, die auch aromatische Reste eingebaut haben können, wie (Oligo)ethylenglykol, (Oligo)propylenglykol-(1,2) und -(1,3), Butylenglykol-(1,4) und -(2,3), Hexandiol-(1,6), Octandiol-(1,8), Neopentylglykol, Cyclohexandimethanol, (1,4-Bis-hydroxymethylcyclohexan), 2-Methyl-1,3-propandiol, Trimethylolpropanmonoallylether, Polyallylglycidylether oder Copolymerisate des Allylglycidylethers mit Propylenoxid oder Ethylenoxid, Glycerinmonoallylether oder OH-terminierte, bis-funktionelle Kautschukoligomere, wie z.B. Dihydroxyoligobutadien und Bis-2,3(4-hydroxyethoxyphenyl)propan. Vorzugsweise werden Hexandiol-(1,6-, Butylenglycol-(1,4) und Neopentylglycol verwendet.

Geeignete Verzweiger sind Polyalkohole mit 3 oder mehr alkoholischen OH-Gruppen, Polycarbonsäuren mit 3 oder mehr Carbonsäure-Substituenten, Hydroxycarbonsäuren mit aliphatischen OH- und Carbonsäure-Funktionen, wobei mindestens 3 dieser Funktionen vorliegen müssen.

Beispiele dafür sind Trimethylolpropan, Pentaerythrit, Trimethylolethan, Glycerin, Diglycerin, Bistrimethylolpropan, Bispentaerythrit, 1,2,6-Trihydroxyhexan, Mannit, Sorbit, Trimesinsäure, Trimellithsäure, Zitronensäure, Weinsäure, Trimerfettsäure, bevorzugt Trimethylolpropan oder Pentaerythrit.

Geeignete phenolische Kettenabbrecher sind Hydroxyarylcarbonsäuren wie beispielsweise p-Hydroxybenzoesäure, m-Hydroxybenzoesäure, Salicylsäure, 4-Hydroxyzimtsäure, 3-Hydroxyzimtsäure oder Phloretinsäure oder deren Estern mit $C_1$-$C_6$-Alkoholen. Vorzugsweise werden m- oder p-Hydroxybenzoesäuren oder ihre Ester mit $C_1$-$C_6$-Alkoholen eingesetzt.

Neben der erfindungsgemäß einzusetzenden Kettenabbrechern können auch aliphatische oder aromatische Monocarbonsäuren oder deren Ester mit aliphatischen Alkoholen als Kettenabbrecher mitverwendet werden. Geeignete Monocarbonsäuren sind Stearinsäure, Ölsäure, Linolsäure, Linolensäure, Benzoesäure oder tert.-Butylbenzoesäure.

Geignete Katalysatoren für die Polyesterherstellung sind die bekannten Umesterungskatalysatoren, wie beispielsweise Zinnverbindungen oder Titanverbindungen.

Die Herstellung der Polyester erfolgt durch Mischen der Komponenten, wobei die Umsetzung mit oder ohne Umesterungskatalysatoren verläuft, und zwar bei Temperaturen von 150°C bis 250°C, vorzugsweise von 180°C bis 220°C und bei einer Reaktionszeit von 2 bis 20 Stunden; hierbei werden niedermolekulare Substanzen abdestilliert und bevorzugt am Ende der Reaktion 0,5 bis 6 Stunden lang ein Vakuum von 0,2 bis 100 mbar angelegt.

**Komponente C**

Die erfindungsgemäßen Komponenten C sind Pfropfcopolymerisate von Monomeren C.1 auf kautschukelastische Grundlagen C.2.

Bevorzugte Komponenten C werden erhalten durch Pfropfcopolymerisation von 5 bis 98 Gew.-Teilen einer Pfropfauflage C.1 aus

C.1.1 50 bis 99 Gew.-Teilen mindestens eines Monomeren aus der Gruppe der Vinylaromaten und (Meth)Acrylsäure-$C_1$-$C_4$-Alkylester und

C.1.2 1 bis 50 Gew.-Teile mindestens eines Monomeren aus der Gruppe der Vinylcyanide, (Meth)Acrylsäure-$C_1$-$C_8$-Alkylester sowie der ethylenisch ungesättigen Carbonsäuren und den davon abgeleiteten Derivaten wie Anhydride und Imide

in Gegenwart von 2 bis 95 Gew.-Teilen der Pfropfgrundlage C.2.

Monomere C.1.1 umfassen Vinylaromaten wie beispielsweise Styrol, $\alpha$-Methylstyrol, kernsubstituiertes Styrol wie p-Methylstyrol, p-Chlorstyrol, sowie Methacrylsäure-($C_1$-$C_4$)-Ester wie zum Beispiel Methylmethacrylat, Ethylmethacrylat oder Mischungen dieser Monomere. Beispiele für Monomere C.1.2 sind Vinylcyanide (ungesättigte Nitrile) wie Acrylnitril und Methacrylnitril, (Meth)-Acrylsäure-($C_1$-$C_8$)-Ester wie zum Beispiel Methylmethacrylat, n-Butylacrylat, t-Butylacrylat, ungesättigte Carbonsäuren wie Maleinsäure sowie Derivate (wie Anhydride und Imide) ungesättigter Carbonsäuren, beispielsweise Maleinsäureanhydrid und N-Phenyl-Maleinimid oder Mischungen der genannten Monomere.

Bevorzugte Monomere C.1.1 sind Styrol, α-Methylstyrol und Methylmethacrylat, bevorzugte Monomere C.1.2 sind Acrylnitril, Maleinsäureanhydrid und Methylmethacrylat.

Besonders bevorzugte Monomere sind C.1.1 Styrol und C.1.2 Acrylnitril.

Für die kautschukmodifizierten Pfropfcopolymerisate C. geeignete Pfropfgrundlagen (Kautschuke) C.2. sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke.

Bevorzugte Kautschuke C.2. sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß C.1.1 und C.1.2), mit der Maßgabe, daß die Glasübergangstemperatur der Komponente C. 2 unterhalb 10°C, vorzugsweise unterhalb -20°C liegt. Besonders bevorzugt wird reiner Polybutadienkautschuk.

Besonders bevorzugte Pfropfcopolymerisate C. sind z.b. ABS-Polymerisate.

Besonders bevorzugte Pfropfcopolymerisate C werden z.B. in der US 3 644 574), in der DE-OS 2 248 242 (= GB-PS 1 409 275), in US 3 243 481, US 3 509 237, US 3 660 535 und US 4 239 863 beschrieben.

Der mittlere Teilchendurchmesser $d_{50}$ des Pfropfpolymerisates C beträgt im allgemeinen 0,05 bis 5 µm, vorzugsweise 0,1 bis 2 µm.

Die Pfropfcopolymerisate C werden durch radikalische Polymerisation, z.B. durch Emulsions-, Suspensions-, Lösungs- oder Massepolymerisation hergestellt.

Da bei der Pfropfreaktion die Pfropfmonomeren bekanntlich nicht unbedingt vollständig auf die Pfropfgrundlage aufgepfropft werden, werden erfindungsgemäß unter Pfropfcopolymerisation C auch solche Produkte verstanden, die durch Polymerisation der Pfropfmonomere in Gegenwart der Pfropfgrundlage gewonnen werden.

Geeignete Acrylatkautschukgrundlagen C.2 der Komponenten C sind vorzugsweise Polymerisate aus Acrylsäurealkylestern, gegebenenfalls mit bis zu 40 Gew.-%, bezogen auf C.2, anderen polymerisierbaren, ethylenisch ungesättigten Monomeren. Zu den bevorzugten polymerisierbaren Acrylsäureestern gehören Acrylsäure-$C_1$-$C_8$-Alkylester, beispielsweise Methyl-, Ethyl-, Butyl-, n-Octyl- und 2-Ethylhexylacrylat; Acrylsäure-Halogenalkylester, vorzugsweise Acrylsäure-Halogen-$C_1$-$C_8$-alkyl-ester, wie Chlorethylacrylat, sowie Mischungen dieser Monomeren.

Zur Vernetzung können Monomeren mit mehr als einer polymerisierbaren Doppelbindung copolymerisiert werden. Bevorzugte Beispiele für vernetzende Monomere sind Ester ungesättiger Monocarbonsäure mit 3 bis 8 C-Atomen und ungesättigter einwertiger alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättige Gruppen aufweisen.

Besonders bevorzugte vernetzende Monomere sind die cyclische Monomere Triallylcyanurat, Triallylisocyanurat, Trivinylcyanurat, Triacryloylhexahydro-s-triazin, Triallylbenzole.

Die Menge der vernetzten Monomere beträgt vozugsweise 0,02 bis 5, insbesondere 0,05 bis 2 Gew.-%, bezogen auf die Pfropfgrundlage C.2.

Bei cyclischen vemetzenden Monomeren mit mindestens 3 ethylenisch ungesättigen Gruppen ist es vorteilhaft, die Menge auf unter 1 Gew.-% der Pfropfgrundlage C.2 zu beschränken.

Bevorzugte "andere" polymerisierbare, ethylenisch ungesättigte Monomere, die neben den Acrylsäureestern gegebenenfalls zur Herstellung der Pfropfgrundlage C.2 dienen können, sind z.B. Acrylnitril, Styrol, α-Methylstyrol, Acrylamide, Vinyl-$C_1$-$C_6$-alkylether Methylmethacrylat, Butadien. Bevorzugte Acrylatkautschuke als Pfropfgrundlage C.2 sind Emulsionspolymeriste.

Weitere geeignete Pfropfgundlagen gemäß C.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Die mittlere Teilchengröße $d_{50}$ ist der Durchmesser, oberhalb und unterhalb dessen jeweils 50 Gew.-% der Teilchen liegen. Er kann mittels Ultrazentrifugenmessungen (W. Scholtan, H. Lange, Kolloid, Z. und Z. Polymere 250 (1972), 782-796) bestimmt werden.

**Komponente D**

Geeignete Komponente D sind Vinyl(Co)Polymerisate D.1 und/oder Polyalkylenterephthalate D.2.

Komponenten D.1 sind (Co)Polymerisate von mindestens einem Monomeren aus

D.1.1 50 bis 99 Gew.-Teilen Vinylaromaten wie beispielsweise Styrol, α-Methylstryrol, kernsubstituiertes Styrol wie p-Methylstyrol, p-Chlorstyrol, sowie Methacrylsäure-($C_1$-$C_4$)-Ester wie zum Beispiel Methylmethacrylat, Ethylmethacrylat oder Mischungen dieser Monomere, und

D.1.2 1 bis 50 Gew.-Teilen Vinylcyanide (ungesättige Nitrile) wie Acrylnitril und Methacrylnitril, (Meth) Acrylsäure-($C_1$-$C_8$)-Ester wie zum Beispiel Methylmethacrylat, n-Butylacrylat, t-Butylacrylat, ungesättigte Carbonsäuren wie Maleinsäure sowie Derivate (wie Anhydride und Imide) ungesättigter Carbonsäure, beispielsweise Maleinsäureanhydrid und N-Phenyl-Maleimid oder Mischungen dieser Monomere.

Die (Co)Polymerisate D.1 sind harzartig, thermoplastisch und kautschukfrei.
Bevorzugte (Co)Polymerisate D.1 umfassen Copolymerisate aus

D.1.1 50 bis 90, insbesondere 60 bis 90 Gew.-%, Styrol, α-Methylstyrol, Methylmethacrylat oder Mischungen daraus, und

D.1.2 10 bis 50 insbesondere 10 bis 40 Gew.-% (Meth) Acrylnitril, Methylmethacrylat, Maleinsäureanyhdrid oder Mischungen daraus,

besonders bevorzugt ist das Copolymerisat aus D.1.1 Styrol und D.1.2 Acrylnitril.

Copolymerisate gemäß Komponente D.1 entstehen häufig bei der Pfropfcopolymerisation der Komponente B als Nebenprodukte, besonders dann, wenn große Mengen Monomere D.1 auf kleine Mengen Kautschuk C.2 gepfropft werden

Die erfindungsgemäß einzusetzende Menge an D.1 bezieht diese Nebenprodukte der Pfropfcopolymerisation von C nicht mit ein.

Die (Co)Polymerisate gemäß D.1 sind bekannt und lassen sich durch radikalische Polymerisation, insbesondere durch Emulsions-, Suspensions-, Lösungs- oder Massepolymerisation herstellen. Die (Co)Polymerisate gemäß Komponente C.1 besitzen vorzugsweise Molekulargewichte $M_w$ (Gewichtsmittel, ermittelt durch Lichtstreuung oder Sedimentation) zwischen 15 000 und 200 000.

Als Komponente D.2 geeignete Polyalkylenterephthalate sind Reaktionsprodukte von aromatischen Dicarbonsäuren (oder ihren reaktionsfähigen Derivaten, z.B. Dimethylestern oder Anhydriden) und aliphatischen, cycloalipathischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen und cycloaliphatischen Diolen mit 2 bis 10 C-Atomen nach bekannten Methoden herstellen (Kunststoff-Handbuch, Band VIII, S. 695 ff, Carl Hanser Verlag, München 1973).

Bevorzugte Polyalkylenterephthalate enthalten 80 bis 100, vorzugsweise 90 bis 100 Mol-%, bezogen auf die Dicarbonsäurekomponente, Terephthalsäurereste und 80 bis 100, vorzugsweise 90 bis 100-%, bezogen auf die Diolkomponente, Ethylenglykol- und/oder Butadiol-1.4-Reste. Neben Terephthalsäureresten sind 0 bis 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacin-, Azelain- oder Cyclohexandiessigsäure. Neben Ethylenglykol- und/oder Butandiol 1,4-Resten sind 0 bis 20 Mol-% anderer aliphatischer Diole mit 3 bis 12 C-Atomen oder cycloaliphatischer Diole mit 6 bis 12 C-Atomen enthalten, z.B. Reste von Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxyphenyl)-propan, 2,4-Dihydroxy-1,1,3,3-Tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932). Die Polyalkylenterephthalate können durch Einbau relativ kleiner Menge 3- oder 4-wertiger Alkohole oder 3- oder 4-basiger Carbonsäuren, wie sie in DE-OS 1 900 270 und US-PS 3 692 744 beschrieben sind, verzweigt werden. Beispiele bevorzugte Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure (oder deren reaktionsfähigen Derivaten, z.B. deren Dialkylestern) und Ethandiol und/oder Butandiol-1,4 hergestellt worden sind sowie deren Mischungen.

Bevorzugte Polyalkylenterephthalate sind auch Copolyester, die aus mindestens zwei der obengenannten Diole hergestellt sind; besonders bevorzugte Copolyester sind Poly-(ethylenglykol/butandiol-1,4)-terephthalate. In den Copolyestern können die verschiedenen Diolreste in Form von Blöcken oder statistisch verteilt vorliegen.

Die Polyalkylenterephthalate gemäß D.2 besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Tl.) bei 25 °C.

Die einzelnen Komponenten können allein oder im Gemisch eingesetzt werden.

Die erfindungsgemäßen Formmassen können darüber hinaus weitere bekannte Zusätze wie Stabilisatoren (z.B. sterisch gehinderte Phosphite und Phenole), übliche Pigmente, Entformungsmittel (z.B. Pentaerithrittetrastearat), Fließhilfsmittel, Füll- und Verstärkungsstoffe (z.B. Glas- und Kohlefasern), Flammschutzmittel (z.B. organische Phosphate wie Triphenylphosphat/Resorcindiphosphat und Antitropfmittel wie Tetrafluorethylenpolymerisate) und Antistatika (z.B. Basis Polyalkylenether, Alkalisalze von Alkansulfonsäuren) in den üblichen Mengen enthalten.

Die erfindungsgemäßen Formmassen können hergestellt werden, indem man die Bestandteile in bekannter Weise vermischt und bei erhöhten Termperaturen, vorzugsweise bei 200 bis 350°C, in üblichen Vorrichtungen wie Innenknetern, Extrudern oder Doppelwellenschneken schmelzcompoundiert oder schmelzextrudiert.

Die erfindungsgemäßen Formmassen können zur Herstellung von Formkörpern jeder Art, z.B. durch Spritzgießen oder Extrusionsblasen, verwendet werden. Beispiele für Formkörper sind: Gehäuseteile (z.B. für Haushaltsgeräte wie Saftpressen, Kaffeemachinen, Mixer), Abdeckplatten für das Baugewerbe und insbesondere Automobilteile. Sie werden außerdem für elektrische Geräte, z.B. für Steckerleisten eingesetzt, weil sie sehr gute elektrische Eigenschaften haben.

Formkörper können auch durch Tiefziehen aus vorher hergestellten Platten oder Folien hergestellt werden.

Ein weiterer Gegenstand der Erfindung ist daher die Verwendung der beschriebenen Formmassen zur Herstellung von Formkörpern.

## Beispiele

Komponenten:

Als Polycarbonat a) wird ein Bisphenol-A-Polycarbonat mit einer relativen Lösungsviskosität von 1,28 (gemessen an einer 0,5 %igen Lösung in Methylenchlorid bei 25°C) eingesetzt.

Als Polycarbonat b) ein Bisphenol-A-Polycarbonat mit einer relativen Lösungsviskosität von 1,26 (gemessen an einer 0,5 %igen Lösung in Methylenchlorid bei 25°C).

Als Polycarbonat c) ein Bisphenol-A-Polycarbonat mit einer relativen Lösungsviskosität von 1,29 (gemessen in Methylenchlorid bei 25°C und in einer Konzentration von 0,5 g/100 ml).

Als Dimerfettsäure-Polyester (Dim-Polyester) wird ein phenolisch hydroxyfunktioneller, verzweigter Dimerfettsäurepolyester gemäß DE-OS 4 132 079, Beispiel A1, eingesetzt:

Man mischt 288,5 g (0,5 mol) $C_{36}$-Dimerfettsäure, 50 g (0,5 mol) Adipol (1,6-Hexandiol), 6,9 g (0,05 mol) 4-Hydroxybenzoesäure, 2,7 g (0,02 mol) Trimethylolpropan, 0,2 g Hydrochinon und 0,2 g Dibutylzinnoxid. Man erhitzt 2 h auf 180°C und 4 h auf 220°C und erhält 303,57 g des Dimerfettsäurepolyesters mit einem Gehalt von 0,35 % phenolischem OH, einer OH-Zahl (aliphatisches OH) von 16 und einer Säurezahl von 4.

Als ABS-Polymerisat wird ein Pfropfpolymerisat von 45 Gew.-Teilen Styrol und Acrylnitril im Gewichtsverhältnis 72:28 auf 55 Gew.-Teile teilchenförmigen vernetzten Polybutadienkautschuk (mittlerer Teilchendurchmesser $d_{50}$ = 0,4 µm), hergestellt durch Emulsionspolymerisation, eingesetzt.

Als SAN wird ein Styrol/Acrylnitril-Copolymerisat mit einem Styrol:Acrylnitril-Gewichtsverhältnis von 72:28 und einer Grenzviskosität von 0,55 dl/g (gemessen in Dimethylformamid bei 20°C) eingesetzt.

Test A:

Prüfbedingungen

Das Spannungsrißverhalten wurde an Stäben der Abmessung 80x10x4 mm untersucht. Als Testmedium wurde eine Mischung aus 50 Vol.-% Toluol und 50 Vol.-% Isooctan verwendet. Die Probekörper wurden mittels einer Kreisbogenschablone vorgedehnt (Vordehnung 0,6 %) und bei Zimmertemperatur im Testmedium gelagert. Das Spannungsrißverhalten wurde über die Rißbildung bzw. den Bruch in Abhängigkeit von der Expositionszeit im Testmedium beurteilt.

Die Kerbschlagzähigkeit wurde nach ASTM D 256 bestimmt.

Beispiel 1

Man löst 1 800 g Polycarbonat a) und 200 g Dim-Polyester in einer Mischung aus 4 l Chlorbenzol und 8 l Methylenchlorid und dampft die Lösung im Ausdampfextruder (ZSK 32 mit Vakuumdom) bei 280°C ein.

Man erhält ein Material, dessen Zäh-Spröd-Übergang im Kerbschlagversuch bei -40°C liegt und das nach Spannung auf 0,6 % Randfaserdehnung und 2 minütiger Einwirkung einer Mischung Isooctan/Toluol 1:1 keine Risse zeigt.

Vergleichsbeispiel 1a

Polyestercarbonat mit 10 Gew.-% Dim-Polyester-Anteil

22,6 g Bisphenol-A, 2,54 g Dim-Polyester und 3 mol% tert.-Butylphenol als Kettenabbrecher werden zusammen mit 400 ml destilliertem Wasser, 24 g NaOH und 400 ml Dichlormethan vorgelegt. Anschließend werden unter Rühren 20 g Phosgen eingeleitet und 0,14 g N-Ethylpiperidin zugegeben. Es wird 1h bei Raumtemperatur gerührt und mit verdünnter Salzsäure angesäuert. Nach Abtrennen der organischen Phase und Neutralwaschen wird eingeengt.

Das Produkt hat eine relative Lösungsviskosität $\eta_{rel}$ = 1,31 (gemessen an einer 0,5%igen Lösung in Methylenchlorid bei 20°C).

Man erhält ein Material, das bei -20°C im Kerbschlagversuch Zähbruch zeigt.

Beispiel 2

Man mischt

| | |
|---|---|
| 40 | Gew.-% Polycarbonat b) |
| 21,6 | Gew.-% Polycarbonat a) |
| 2,4 | Gew.-% Dim-Polyester |
| 20 | Gew.-% ABS-Pfropf |
| 16 | Gew.-% SAN |

Die Kerbschlagzähigkeit beträgt bei einer Abspritztemperatur von 260°C 61 kJ/$m^2$, bei einer Abspritztemperatur von 280°C 55 kJ/$m^2$ (d.h. 10 % weniger als bei 260°C).

Vergleichsbeispiel 2a

Man mischt

| | |
|---|---|
| 40 | Gew.-% Polycarbonat b) |
| 24 | Gew.-% Polyestercarbonat gemäß Vergleichsbeispiel 1a |
| 20 | Gew.-% ABS-Pfropf |
| 16 | Gew.-% SAN |

Die Kerbschlagzähigkeit beträgt bei einer Abspritztemperatur von 260°C 56 kJ/$m^2$, bei einer Abspritztemperatur von 280°C 49 kJ/$m^2$ (d.h. 12,5 % weniger als bei 260°C).

Vergleichsbeispiel 2b

Man mischt 24 Gew.-% ABS-Pfropfpolymerisat, 16 Gew.-% SAN und 60 Gew.-% Polycarbonat b). Die Kerbschlagzähigkeit beträgt bei einer Abspritztemperatur von 260°C 52 kJ/$m^2$, bei einer Abspritztemperatur von 280°C 44 kJ/$m^2$ (d.h. 15 % weniger als bei 260°C).

Test B

Das Vergleichsbeispiel enthält Pentaerithrittetrastearat (PETS) statt DIM-Polyester Die einzelnen Komponenten werden auf einem 3,5 l Innenkneter bei Temperaturen zwischen 210 und 250°C aufgeschmolzen und homogenisiert.

Prüfbedingungen:

Zur Messung der Haft-und Gleitreibungskoeffizienten werden auf einer Spritzgußmachinen mit speziellem Werkzeug bei 260°C Massetemperatur und 80°C Wekzeugtemperatur tellerförmige Formteile (Durchmesser 10 cm) hergestellt.

Die Haftreibung ist dabei proportional zum ermittelten Drehmoment, das notwendig ist, um bei einer Drehbewegung das Losbrechen des Formteils von der Werkzeug-Stahloberfläche zu ermöglichen.

Die Gleitreibung ist proportional zum ermittelten Drehmoment, welches beim Gleiten (Fortsetzung der Drehbewegung) des Formteils auf der Werkzeug-Stahloberfläche aufzubringen ist.

Für die Haft- und Gleitreibungskraft $F_{R,H}$ und $F_{R,G}$ gilt:

$$F_{R,H} = \mu_H \times F_N$$

$$F_{R,G} = \mu_G \times F_N$$

$F_N$: Normalkraft, die auf das Formteil wirkt
$\mu_H$: Reibungskoeffizient (Haftreibung)
$\mu_G$: Reibungskoeffizient (Gleitreibung)

Die Reibungskräfte hängen mit dem gemessenen Drehmoment $M_d$ wie folgt zusammen:

$$M_d = F_R \times 1$$

1: zurückgelegte Wegstrecke

Niedrige Haftreibungskoeffizienten bedeuten somit günstiges Entformungsverhalten einer Formmasse.

Von den Formmassen werden auf einer Spritzgußmaschine Stäbe der Abmessungen 80 x 10 x 4 $mm^3$ (Verarbeitungstemperatur 260°C) hergestellt, an denen die Kerbschlagzähigkeit bei Raumtemperatur (Methode ISO 180 1A) und die Wärmeformbestandigkeit nach Vicat VST B 120 (DIN 53 460) gemessen wird.

Zusammensetzung und technologische Eigenschaften erfindungsgemäßer Formmassen finden sich in nachstehender Tabelle.

Wie der Tabelle entnommen werden kann, führt der Zusatz der erfindungsgemäßen Komponente B in vergleichbarer oder geringeren Menge als PETS (Entformungsmittel des Standes der Technik) zu einer Verbesserung der Entformbarkeit; Zähigkeit und Wärmeformbeständigkeit werden nicht beeinträchtigt (Vergleichsbeispiel 3, erfindungsgemäße Beispiele 4 bis 6 ).

**Zusammensetzung und Eigenschaften der Formmassen**

| Beispiel | Komponenten [Gew.-Teile] | | | | | Kerbschlag-zähigkeit | Vicat VST B 120 | Haft- Reibungs-koeffizienten | Gleit- Reibungs-koeffizienten |
|---|---|---|---|---|---|---|---|---|---|
| | PC c) | ABS b) | SAN | DIM-Polyester | PETS | ISO 180 1A [$kJ/m^2$] | DIN 53 460 [°C] | | |
| 3 (Vergleich) | 57,7 | 20,8 | 20,8 | - | 0,7 | 49 | 119 | 0,28 | 0,13 |
| 4 | 57,7 | 20,9 | 20,9 | 0,5 | - | 50 | 120 | 0,21 | 0,09 |
| 5 | 57,7 | 20,8 | 20,8 | 0,7 | - | 50 | 120 | 0,21 | 0,07 |
| 6 | 57,4 | 20,8 | 20,8 | 1 | - | 50 | 120 | 0,21 | 0,06 |

**Patentansprüche**

1. Thermoplastische Formmassen enthaltend

   A) 10 bis 100 Gew.-Teile aromatisches Polycarbonat und/oder aromatisches Polyestercarbonat.

   B) 0,05 bis 25 Gew.-Teile phenolisch hydroxyfunktionelle verzweigte Dimerfettsäurepolyester.

   C) 0 bis 70 Gew.-Teile Pfropfcopolymerisat von

   C.1 5 bis 98 Gew.-Teilen einer Pfropfauflage aus einem oder mehreren Monomeren auf.

   C.2 2 bis 95 Gew.-Teile einer ofer mehrerer elastomeren Pfropfgrundlagen mit Glasübergangstemperaturen < 10°C,

   D) 0 bis 70 thermoplastisches Harz aus der Gruppe der

   D.1 Vinyl(Co)polymerisate und/oder

   D.2 Polyalkylenterephthalate,

   wobei die Summe der Gew.-Teile aus A+B+C+D 100 beträgt.

2. Thermoplastische Formmassen gemäß Anspruch 1, dadurch gekennzeichnet, daß sie 30 bis 96 Gew.-Teile der Komponente A, 2 bis 50 Gew.-Teile der Komponente C und 2 bis 50 Gew.-Teile der Komponente D enthalten.

3. Thermoplastische Formmassen gemäß Ansprüchen 1 und 2, dadruch gekennzeichnet, daß sie 0,1 bis 15 Gew.-Teile der Komponente B enthalten.

4. Thermoplastische Formmassen gemäß Ansprüchen 1 und 2, dadurch gekennzeichnet, daß sie 0,3 bis 10 Gew.-Teile der Komponente B enthalten.

5. Thermoplastische Formmassen gemäß Ansprüchen 1 bis 4, dadurch gekennzeichnet, daß die Komponente C.1 aus

   C.1.1 50 bis 99 Gew.-Teilen mindestens eines Monomeren aus der Gruppe der Vinylaromaten und (Meth) Acrylsäure-$C_1$-$C_4$-Alkylester und

   C.1.2 1 bis 50 Gew.-Teile mindestens eines Monomeren aus der Gruppe der Vinylcyanide, (Meth)Acrylsäure-$C_1$-$C_8$-Alkylester sowie der ethylenisch ungesättigten Carbonsäure und den dabon abgeleiteten Derivaten wie Anhydride und Imide aufgebaut ist.

6. Thermoplastische Formmassen gemäß Ansprüchen 1 bis 5, dadurch gekennzeichnet, daß die Komponente D.1 aus

   D.1.1 50 bis 99 Gew.-Teilen mindestens eines Monomeren aus der Gruppe der Vinylaromaten und (Meth)Acrylsäure-$C_1$-$C_4$-Alkylester und

   D.1.2 1 bis 50 Gew.-Teile mindestens eines Monomeren aus der Gruppe der Vinylcyanide, (Meth) Acrylsäure-$C_1$-$C_8$-Alkylester sowie der ethylenisch ungesättigten Carbonsäuren und den davon abgeleiteten Derivaten wie Anhydride und Imide aufgebaut ist.

7. Thermoplastische Formmassen gemäß Ansprüchen 1 bis 6, dadurch gekennzeichnet, daß Komponente D.2 Polybutylenterephtalat oder Polyethylenterephthalat oder ein Gemisch daraus ist.

8. Thermoplastische Formmassen gemäß Ansprüchen 1 bis 7, dadurch gekennzeichnet, daß sie mindestens einen Zusatz aus der Gruppe der Stabilisatoren, Pigmente, Entformungsmittel, Fließhilfsmittel, Füll- und Verstärkungsstoffe, Flammschutzmittel und Antistatika enthalten.

9. Verwendung der Formmassen der Ansprüche 1 bis 8 zur Herstellung von Formkörpern.

10. Formkörper, hergestellt aus thermoplastischen Formmassen gemäß Anspruch 1 bis 8.

## Claims

1. Thermoplastic moulding compounds containing

   A) 10 to 100 parts by wt of aromatic polycarbonate and/or aromatic polyester carbonate,

   B) 0.05 to 25 parts by wt of phenolic hydroxyfunctional branched dimer fatty acid polyesters,

   C) 0 to 70 parts by wt of graft copolymer from

   C.1 5 to 98 parts by wt of a graft overlay comprising one or more monomers on

   C.2 2 to 95 parts by wt of one or more elastomeric graft bases with glass transition temperatures < 10 °C,

   D) 0 to 70 thermoplastic resin from the group of

   D.1 vinyl(co)polymers and/or

   D.2 polyalkylene terephthalates,

   in which the sum of the parts by wt of A+B+C+D comes to 100.

2. Thermoplastic moulding compounds according to claim 1, characterised in that they contain 30 to 96 parts by wt of component A, 2 to 50 parts by wt of component C and 2 to 50 parts by wt of component D.

3. Thermoplastic moulding compounds according to claims 1 or 2, characterised in that they contain 0.1 to 15 parts by wt of component B.

4. Thermoplastic moulding compounds according to claims 1 or 2, characterised in that they contain 0.3 to 10 parts by wt of component B.

5. Thermoplastic moulding compounds according to claims 1 to 4, characterised in that component C.1 comprises

   C.1.1 50 to 99 parts by wt of at least one monomer from the group of the vinyl aromatics and (meth) acrylic acid-$C_1$-$C_4$-alkyl esters and

   C.1.2 1 to 50 parts by wt of at least one monomer from the group of the vinyl cyanides, (meth) acrylic acid-$C_1$-$C_8$-alkyl esters as well as ethylenically unsaturated carboxylic acid and the derivatives derived therefrom such as anhydrides and imides.

6. Thermoplastic moulding compounds according to claims 1 to 5, characterised in that component D.1 is made up of

   D.1.1 50 to 99 parts by wt of at least one monomer from the group of the vinyl aromatics and (meth) acrylic acid-$C_1$-$C_4$-alkyl esters and

   D.1.2 1 to 50 parts by wt of at least one monomer from the group of the vinyl cyanides, (meth) acrylic acid-$C_1$-$C_8$-alkyl esters as well as ethylenically unsaturated carboxylic acid and the derivatives derived therefrom such as anhydrides and imides.

7. Thermoplastic moulding compounds according to claim 1 to 6, characterised in that component D.2 is polybutylene terephthalate or polyethylene terephthalate or a mixture thereof.

8. Thermoplastic moulding compounds according to claims 1 to 7, characterised in that they contain at least one

additive from the group of the stabilizers, pigments, mould release agents, flow promoters, fillers and reinforcing agents, flame retardants and antistatic agents.

**9.** Use of the moulding compounds of claims 1 to 8 for the manufacture of mouldings.

**10.** Mouldings manufactured from thermoplastic moulding compounds according to claims 1 to 8.

## Revendications

**1.** Masses à mouler thermoplastiques contenant:

A) à raison de 10 à 100 parties en poids, un polycarbonate aromatique et/ou un polyestercarbonate aromatique,

(B) à raison de 0,05 à 25 parties en poids, des polyesters d'acides gras dimères ramifiés à fonctionnalité hydroxyle phénolique,

(C) à raison de 0 à 70 parties en poids, un copolymère greffé de

C.1 à raison de 5 à 98 parties en poids, un greffon constitué par un ou plusieurs monomères,

C.2 à raison de 2 à 95 parties en poids, un ou plusieurs substrats de greffage élastomères possédant des températures de transition vitreuse < 10°C,

(D) à raison de 0 à 70 parties en poids, une résine thermoplastique choisie parmi le groupe comprenant

D.1 des (co)polymères vinyliques et/ou

D.2 des polyalkylènetéréphtalates,

la somme des parties en poids de A+B+C+D étant égale à 100.

**2.** Masses à mouler thermoplastiques selon la revendication 1, caractérisées en ce qu'elles contiennent le composant A à raison de 30 à 96 parties en poids, le composant C à raison de 2 à 50 parties en poids et le composant D à raison de 2 à 50 parties en poids.

**3.** Masses à mouler thermoplastiques selon les revendications 1 et 2, caractérisées en ce qu'elles contiennent le composant B à raison de 0,1 à 15 parties en poids.

**4.** Masses à mouler thermoplastiques selon les revendications 1 et 2, caractérisées en ce qu'elles contiennent le composant B à raison de 0,3 à 10 parties en poids.

**5.** Masses à mouler thermoplastiques selon les revendications 1 à 4, caractérisées en ce que le composant C.1 est constitué par

C.1.1 à raison de 50 à 99 parties en poids, au moins un monomère choisi parmi le groupe comprenant des composés vinylaromatiques et des esters alkyliques en $C_1$-$C_4$ d'acide (méth)acrylique et

C.1.2 à raison de 1 à 50 parties en poids, au moins un monomère choisi parmi le groupe comprenant des cyanures de vinyle, des esters alkyliques en $C_1$-$C_8$ d'acide (méth)acrylique, ainsi que des acides carboxyliques à insaturation éthylénique et leurs dérivés tels que des anhydrides et des imides.

**6.** Masses à mouler thermoplastiques selon les revendications 1 à 5, caractérisées en ce que le composant D.1 est constitué par

D.1.1 à raison de 50 à 99 parties en poids, au moins un monomère choisi parmi le groupe comprenant des composés vinylaromatiques et des esters alkyliques en $C_1$-$C_4$ d'acide (méth)acrylique et

D.1.2 à raison de 1 à 50 parties en poids, au moins un monomère choisi parmi le groupe comprenant des cyanures de vinyle, des esters alkyliques en $C_1$-$C_8$ d'acide (méth)acrylique, ainsi que des acides carboxyliques à insaturation éthylénique et leurs dérivés tels que des anhydrides et des imides.

**7.** Masses à mouler thermoplastiques selon les revendications 1 à 6, caractérisées en ce que le composant D.2 est le polybutylènetéréphtalate ou le polyéthylènetéréphtalate ou un mélange de ces derniers.

**8.** Masses à mouler thermoplastiques selon les revendications 1 à 7, caractérisées en ce qu'elles contiennent au moins un additif choisi parmi le groupe comprenant des stabilisateurs, des pigments, des agents de démoulage, des fluidifiants, des matières de remplissage et de renforcement, des agents ignifuges et des agents antistatiques.

**9.** Utilisation des masses à mouler selon les revendications 1 à 8 pour la fabrication de corps moulés.

**10.** Corps moulés fabriqués à partir de masses à mouler thermoplastiques selon les revendications 1 à 8.